**Europäisches Patentamt**

**European Patent Office**

**Office européen des brevets**

(11) Veröffentlichungsnummer: **0 209 608**

**A1**

## (12) EUROPÄISCHE PATENTANMELDUNG

(21) Anmeldenummer: 85108943.3

(22) Anmeldetag: 17.07.85

(51) Int. Cl.⁴: **B29C 67/22** , B29C 39/16 , //B29K105:04

(43) Veröffentlichungstag der Anmeldung:
28.01.87 Patentblatt 87/05

(84) Benannte Vertragsstaaten:
**AT BE CH DE FR GB IT LI LU NL SE**

(71) Anmelder: **Prignitz, Herbert**
**Papyrusweg 12**
**D-2000 Hamburg 74(DE)**

(72) Erfinder: **Prignitz, Herbert**
**Papyrusweg 12**
**D-2000 Hamburg 74(DE)**

(74) Vertreter: **Werdermann, Franz, Dipl.-Ing. et al**
**Patentanwälte Richter u. Werdermann Neuer**
**Wall 10**
**D-2000 Hamburg 36(DE)**

(54) **Doppelband-Formmaschine für die Herstellung von Schaumkunststoffplatten als fortlaufender Strang.**

(57) Die Erfindung betrifft eine Doppelband-Formmaschine für die Herstellung von Schaumkunststoffplatten als fortlaufender Strang mit zwei mit entgegengesetztem Drehsinn umlaufenden endlosen Transportbändern (10,20) in Form von Gurten oder Stahlbändern, die über je eine Antriebstrommel (11,21) mindestens je eine als Gleitbahn dienende Stützplatte (13,23) und je eine Umlenkrolle (14,24) geführt sind, wobei die beiden sich gegenüberliegenden parallel und in gleicher Richtung über je eine Stützplatte (13,23) laufenden Bandabschnitte den zur Formung des Schaumkunststoffstranges dienenden Raum begrenzen, bei der erfindungsgemäß vorgesehen ist, daß zwischen diesen Bandabschnitten und ihren Stützplatten ein die Reibung minderndes Luftpolster vorgesehen ist, wodurch erreichbar ist, die an den beiden sich gegenüberliegenden in gleicher Richtung laufenden Bandabschnitten auftretenden Zugkräfte möglichst klein zu halten.

FIG 1

## Doppelband-Formmaschine für die Herstellung von Schaumkunststoffplatten als fortlaufender Strang.

Die Erfindung bezieht sich auf eine Doppelband-Formmaschine für die Herstellung von Schaumkunststoffplatten als fortlaufender Strang. Eine solche Maschine weist zwei mit entgegengesetztem Drehsinn umlaufende endlose Transportbänder auf, die beispielsweise von Gurten oder Stahlbändern gebildet sein können, welche über eine Antriebstrommel, mindestens je eine als Gleitbahn dienende Stützplatte und je eine Umlenkrolle geführt sind. Der zur Formung des Kunststoffstranges dienende Raum wird oben und unten von zwei sich gegenüberliegenden, parallel und in gleicher Richtung über je eine Stützplatte laufenden Bandabschnitten der beiden Bänder begrenzt. Die beiden Schmalseiten dieses kanalartigen Raumes können durch ebenfalls · umlaufende Seitenbänder oder durch feststehende einstellbare Seitenschienen begrenzt sein.

Während des Aufschäumens des Schaumkunststoffmaterials entwickelt dieses einen erheblichen, längs des Raumes zwischen den beiden in gleicher Richtung laufenden Bandabschnitten unterschiedlich hohen Expansionsdruck. Die von dem oberen und dem unteren Band aufzubringenden Zugkräfte werden im wesentlichen durch die senkrecht zur Ebene des jeweiligen Bandabschnitts wirkenden Kraftkomponenten und die zwischen den Bändern und ihren Stützplatten wirksame Reibung bestimmt. Im Ruhezustand der Maschine und beim Anfahren ist diese Reibung besonders groß. Während des Betriebs der Maschine dagegen herrscht zwischen je einem Band und seiner Stützplatte nur die Gleitreibung, welche kleiner ist als die Reibung der Ruhe. Bei Maschinen der zur Rede stehenden Art kann die an den Bändern wirksame Zugkraft bis zu mehreren Mp betragen. Sowohl die senkrechten Kraftkomponenten als auch die Gleitreibung können Unregelmäßigkeiten aufweisen und stellenweise längs der Stützplatten der beiden Bänder verschieden sein. Der Expansionsdruck des aufschäumenden Materials ist regelmäßig in einem Bereich in der Nähe der Eintrittsöffnung größer als im weiteren Verlauf des Formkanals. An dem unteren Band ist die Zugkraft wegen der zusätzlich zu dem Expansionsdruck wirksamen Belastung der Stützplatte durch das Gewicht des Schaumkunststoffstranges und seiner etwaigen Kaschierungen sowie der mit durchlaufenden Bänder größer als an dem oberen Band.

Die Erfindung löst die Aufgabe, bei einer Doppelband-Formmaschine der zur Rede stehenden Art die an den beiden sich gegenüberliegenden in gleicher Richtung laufenden Bandabschnitten auftretenden Zugkräfte möglichst klein zu halten.

Diese Aufgabe wird erfindungsgemäß dadurch gelöst, daß zwischen den aktiven Bandabschnitten und ihren Stützplatten ein die Reibung minderndes Luftpolster vorgesehen ist. Hierzu können in den Stützplatten Luftzuführungsdüsen mit in Längsrichtung der Bandabschnitte verteilt angeordneten Mündungsöffnungen vorgesehen sein. Je nach der Breite der Bänder kann es vorteilhaft sein, die Mündungsöffnungen der Luftzuführungsdüsen entweder längs der Mittellinie der Stützplatten in Bandlaufrichtung anzuordnen oder sie auf der Stützplattenoberfläche auch in deren Breite zu verteilen. Im Hinblick darauf, daß die Belastung der Grenzfläche zwischen der Stützplatte und dem darauf ruhenden oder gleitenden Bandabschnitt, wie - schon erwähnt, an dem unteren Band in aller Regel größer ist als an dem oberen, kann es weiterhin von Vorteil sein, die in den Stützplatten angeordneten Luftzuführungsdüsen mit unterschiedlich hohem Luftdruck zu speisen. Auch kann es vorteilhaft sein, die Luftzuführungsdüsen in Bereichen, in denen eine besonders hohe Normalkraft zu erwarten ist, wie z.B. in den Bereichen des Aufschäumens, mit besonders dichter Verteilung anzuordnen.

Durch die Erfindung läßt sich für die beiden aktiven, die Flachseiten des Schaumstoffstranges begrenzenden Bandabschnitte eine erhebliche Verkleinerung der Zugkräfte und damit der Antriebsdrehmomente sowie darüber hinaus auch eine Vergleichmäßigung der Antriebsdrehmomente beider Bänder erreichen.

Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 eine schematische Seitenansicht einer Doppelband-Formmaschine gemäß der Erfindung einschließlich des Schemas der Luftverteilerleitungen,

Fig. 2 eine schematische Schnittdarstellung, in Band laufrichtung gesehen, des unteren und oberen Transportbandes sowie deren Stützplatten mit darin angeordneten Luftzuführungsdüsen.

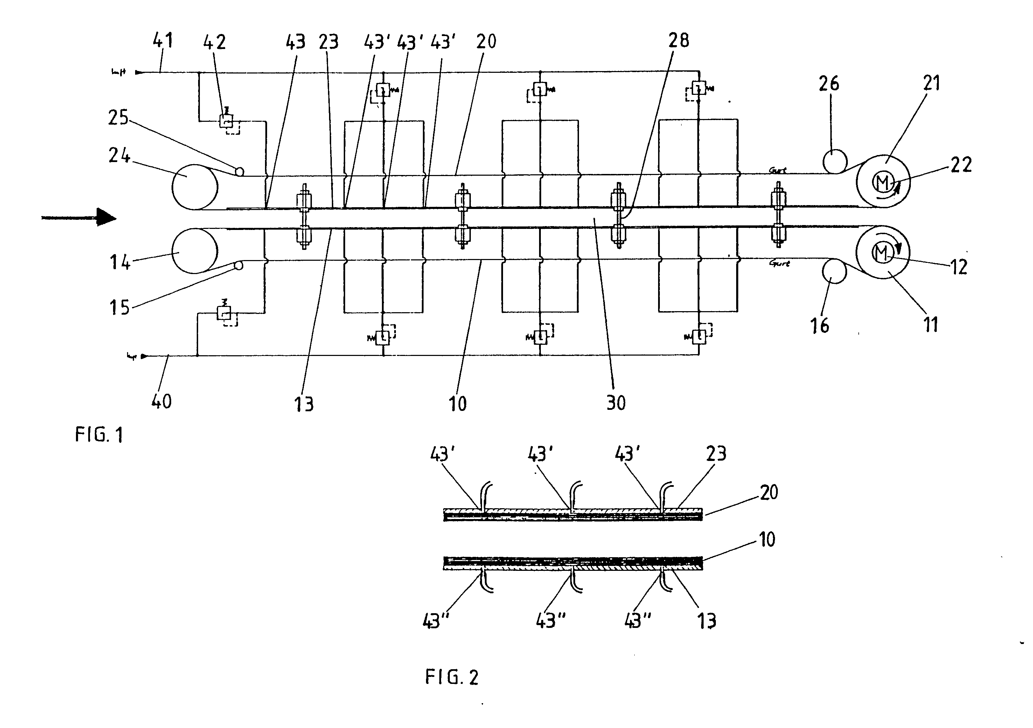

10 ist das untere und 20 das obere Transportband, 11, 21 sind die Antriebstrommeln mit den Einzelantriebsmotoren 12, 22. Die jeweils aktiven, die Flachseiten des Formkanals 30 begrenzenden Bandabschnitte liegen gegen Stützplatten 13, 23 an. Zur Herstellung von Schaumstoffplatten unterschiedlicher Dicke ist die Höhe des Förderkanals 30 bzw. der Abstand zwischen den Stützplatten 13, 23 mit Hilfe von Hubvorrichtungen mit Spindeln 28 einstellbar. Am einen Ende der Maschine wird das aufschäumbare Gemisch, wie in Fig. 1 links durch einen Pfeil angegeben, in den Formkanal 30 eingeführt. Der Schaumstoff expandiert in einem Bereich in der Nähe des Eintrittsendes, verfestigt sich dann im weiteren Verlauf des Formkanals und verläßt diesen am anderen Ende der Maschine in Form eines Stranges mit rechteckigem Querschnitt, der außerhalb des Kanals in Platten von der gewünschten Länge zerteilt wird. 14, 24, 15, 25, 16, 26 sind Umlenk-, Lauf-und/oder Spannrollen der endlosen Bänder 10, 20.

40, 41 sind Druckluftzuleitungen mit längs des Formkanals verteilt angeordneten über Einstellventile 42 geführten Verteilerleitungen, die zu einzelnen in jeweils einer Stützplatte angeordneten Luftzuführungsdüsen 43 bzw. Düsengruppen 43', 43" führen. Fig. 2 zeigt je eine in Querrichtung über die untere Stützplatte 13 und die obere Stützplatte 23 verteilt angeordnete Gruppe 43' bzw. 43" von Luftverteilerdüsen.

Es ist hiernach ohne weiteres ersichtlich, daß und in welcher Weise einzelne oder Gruppen von Luftverteilerdüsen mit Druckluft unterschiedlichen einstellbaren Druckes gespeist werden können, um längs des Formkanals der Maschine ein Luftpolster zwischen den aktiven Bandabschnitten und deren Stützplatten zu erzeugen, das die Reibung zwischen Band und Stützplatte in dem jeweils erforderlichen Maße vermindern kann.

Durch die Erfindung kann die Zugkraft und damit das Antriebsmoment beider Bänder erheblich, praktisch bis etwa zu einem Viertel, herabgesetzt werden, so daß nicht nur erheblich an Antriebsleistung gespart wird, sondern auch der Schäumbetrieb bedeutend gleichmäßiger abläuft, weil durch die verringerte Reibung besonders die Ungleichmäßigkeiten beim Aufschäumen in der Maschine weitgehend ausgeglichen werden.

Das vorstehend beschriebene Ausführungsbeispiel soll lediglich das Prinzip der Erfindung veranschaulichen. Die Möglichkeiten zur Ausführung der Erfindung sind nicht auf dieses Beispiel beschränkt.

Da auf die untere Stützplatte zusätzlich zu dem nach oben und unten wirkenden Schäumdruck noch die Belastung die Gewichte des durchlaufenden Schaumstoffmaterials sowie sonstiger durchlaufender Teile wie Kaschierungen, Bänder, Treibgurte, Auflagegurte, Formgurte und Seitengurte hinzukommt, wird es sich in der Regel empfehlen, eine Speisung der dem unteren und dem oberen Transportgurt zugeordneten Luftzuführungsdüsen mit entsprechend unterschiedlichen Drücken vorzusehen.

## Ansprüche

1. Doppelband-Formmaschine für die Herstellung von Schaumkunststoffplatten als fortlaufender Strang mit zwei mit entgegengesetztem Drehsinn umlaufenden endlosen Transportbändern in Form von Gurten oder Stahlbändern, die über je eine Antriebstrommel, mindestens je eine als Gleitbahn dienende Stützplatte und je eine Umlenkrolle geführt sind, wobei die beiden sich gegenüberliegenden parallel und in gleicher Richtung über je eine Stützplatte laufenden Bandabschnitte den zur Formung des Schaumkunststoffstranges dienenden Raum begrenzen, dadurch gekennzeichnet, daß zwischen diesen Bandabschnitten und ihren Stützplatten ein die Reibung minderndes Luftpolster vorgesehen ist.

2. Maschine nach Anspruch 1, dadurch gekennzeichnet, daß in den Stützplatten Luftzuführungsdüsen mit in Längsrichtung der Bandabschnitte verteilt angeordneten Mündungsöffnungen vorgesehen sind.

3. Maschine nach Anspruch 2, dadurch gekennzeichnet, daß die Mündungsöffnungen der in den Stützplatten angeordneten Luftzuführungsdüsen auch in Querrichtung der Stützplatten verteilt angeordnet sind.

4. Maschine nach einem der Ansprüche 1 bis 3, dadurch gekennzeichnet, daß die in den Stützplatten angeordneten Luftzuführungsdüsen mit unterschiedlich hohem Luftdruck gespeist sind.

FIG. 1

FIG. 2

0 209 608

Europäisches Patentamt

**EUROPÄISCHER RECHERCHENBERICHT**

Nummer der Anmeldung

EP 85 10 8943

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 704 839 (MASCHINENFABRIK HENNECKE GmbH) <br> * Ansprüche 1-12; Abbildung 1 * | 1-4 | B 29 C 67/22 <br> B 29 C 39/16 // <br> B 29 K 105:04 |
| | --- | | |
| A | US-A-3 340 795 (HARTLEY J.C.) <br> * Ansprüche 1,3; Abbildungen 1,3 * | 1-3 | |
| | --- | | |
| A | DE-B-1 084 014 (HERCULOK CORPORATION) <br> * Ansprüche 1,4,7; Abbildungen 5,7 * | 1-3 | |
| | --- | | |
| A | US-A-4 252 512 (KORNYLAK T.A.) | | |
| | ----- | | |

RECHERCHIERTE SACHGEBIETE (Int. Cl.4)

B 29 C
B 30 B

Der vorliegende Recherchenbericht wurde für alle Patentansprüche erstellt.

| Recherchenort <br> DEN HAAG | Abschlußdatum der Recherche <br> 05-03-1986 | Prüfer <br> BELIBEL C. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82